# EUROPEAN PATENT SPECIFICATION

(11) **EP 4 559 655 B1**
(45) Date of publication and mention of the grant of the patent: **06.05.2026**
(21) Application number: 23307050.7
(22) Date of filing: 24.11.2023
(51) Int. Cl.: B29C 43/34, H01M 4/04, B29C 31/02, H01M 10/04, B29C 43/24, B29C 43/58, B29K 105/00, B29L 31/34, B29C 43/00

(54) **HOPPER COMPRISING AT LEAST ONE ROTATING HOPPER BODY, AND CALENDERING SYSTEM COMPRISING SUCH A HOPPER**
TRICHTER MIT MINDESTENS EINEM ROTIERENDEN TRICHTERKÖRPER UND KALANDRIERUNGSSYSTEM MIT SOLCH EINEM TRICHTER
TRÉMIE COMPRENANT AU MOINS UN CORPS DE TRÉMIE ROTATIF, ET SYSTÈME DE CALANDRAGE COMPRENANT UNE TELLE TRÉMIE

(43) Date of publication of application: 28.05.2025
(73) Proprietor: Automotive Cells Company SE, 33520 Bruges (FR)
(72) Inventor: LOCQUEVILLE, Frederick, 14160 Dives sur Mer (FR); CHORIER, Gaël, 33290 BLANQUEFORT (FR)
(74) Representative: Alatis

(56) References cited:
- EP-B1- 2 903 058
- CN-A- 107 732 143
- CN-A- 108 723 370
- CN-A- 111 571 904
- CN-A- 114 744 145
- CN-U- 205 660 159
- JP-B2- 3 909 360

## Description

### TECHNICAL FIELD OF THE INVENTION

The present invention relates to a hopper, and to a calendering system comprising two parallel calender rollers and such a hopper.

### BACKGROUND ART

Calendering is a speciality process for high-volume, high quality plastic film and sheet, mainly used for PVC (polyvinyl chloride) as well as for certain other modified thermoplastics. A calendering system operates by passing a material between two contra-rotating parallel rollers to smooth or gloss it, or to produce a film or a sheet. In some particular applications, the material can be an electrically conductive mixture (for example in powder form), and the calendering system participate to fabricate electrodes for electrochemical cells (by forming a film at the outlet of the rollers by calendering).

Calendering systems thereby comprising two parallel calender rollers and a hopper, are known in the art. The hopper classically comprises a hopper body which contains powder and is arranged above the two parallel calender rollers so as to supply with powder an interspace between the two parallel calender rollers. The hopper body defines an internal housing at atmospheric pressure in which powder is stored. Such a calendering system may further comprise a device for feeding powder into the interspace between the two calender rollers. Such a device uses mechanical parts (screw, brush, stirrer...) for drain matter. However, the matter may fall into the interspace without any control about the matter which is already present (open loop). Besides, the mechanical parts which are used in such a device introduce a high risk of powder fibrillation. This action can make obstruction and hence causes the system to collapse.

In order to overcome the above-mentioned drawbacks, some solutions have been developed in which the calendering system further comprises a vibrating device. The patent document CN 114744145 A discloses for example such a calendering system. The vibrating device is an ultrasonic vibrating device which is provided on an outer side wall of a material guide channel arranged beneath the hopper, and which can adjust the discharge speed and discharge density, to ensure smooth feeding of materials and to allow control of the discharge of the material guide channel. Patent document EP 1 800 775 A1 also discloses such a calendering system in which the hopper comprises a vibrating device provided on an outer side wall of the hopper to control the weight of the electrically conductive mixture in the hopper.

However, such vibration calendering systems don't allow to manage powder volume or powder location. Furthermore, there is no compensation in such calendering systems when matter is not regularly fed, and matter holes are likely to appear.

A need therefore exists for a hopper for a calendering system, such a hopper allowing to manage powder volume or powder location, while providing automatic compensation system when matter is not regularly fed.

### SUMMARY OF THE INVENTION

The object of the present invention is therefore to overcome the drawbacks of the prior art by providing a hopper for a calendering system which allows to manage powder volume or powder location, while providing automatic compensation system when matter is not regularly fed.

According to a first aspect of the invention, there is provided a hopper comprising a frame and at least one hopper body mounted onto the frame and containing powder, said hopper body having an outer wall which defines an internal housing in which said powder is stored ; the hopper body is mounted rotatable relative to the frame about a longitudinal rotation axis, said longitudinal rotation axis being a main extension axis of the hopper body, and the outer wall of the hopper body being provided with a scoop, said scoop defining a through opening passing through the outer wall of the hopper body, said scoop being configured to collect part of the powder at each rotation cycle of the hopper body, at a first position of the hopper body, and to release said part of the powder out of the hopper body through said opening, due to gravity, at a second position of the hopper body which is distinct from the first position.

The hopper body thus configured and being provided with such a scoop allows to control the powder feed, and to manage powder volume or powder location. In addition, thanks to this rotary configuration and oscillatory movement of the hopper body with different positions, powder can be easily controlled to flow continuously and homogeneously.

In a particular embodiment of the invention, the hopper body is further provided with at least one rotating actuator, said at least one rotating actuator being configured to rotate the hopper body relative to the frame.

In another particular embodiment of the invention, the cross section of the scoop has a substantially "Z" shape.

In another particular embodiment of the invention, the first and second positions of the hopper body are shifted by an angle of substantially 90 degrees.

In another particular embodiment of the invention, the hopper further comprises at least one flap, said at least one flap being arranged within said hopper body, being located at an inner aperture of the scoop, and being configured to at least partially close said scoop. This allows to disturb the powder flow upon receipt of a control signal from the control device, and thus to load less powder when there is a need to decrease the powder distribution in one or several positions of the hopper body.

In another particular embodiment of the invention, the hopper body further comprises a feeler cap, said feeler cap being arranged opposite the scoop of said hopper body and being configured to supply with powder said hopper body upon receipt of a control signal from a control device.

The above-mentioned embodiments can be combined.

According to a second aspect of the invention, there is provided a calendering system comprising two parallel calender rollers and such a hopper, the two parallel calender rollers defining an interspace between them, the at least one hopper body of the hopper being arranged above the two parallel calender rollers so as to supply with powder said interspace between the two parallel calender rollers.

Thanks to the particular configuration of the hopper, the calendering system according to the invention allows to have a continuous feeding in calendering input by gravity effect. The calendering system according to the invention also avoids powder fibrillation, because there are no motion mechanical parts in contact with powder, and has a further advantage which lies in that no transportation is needed between the dosing device of the system and the calender input. Such a configuration also allows to decrease pollution, because of a low interface between air and powder.

In a preferred embodiment, the calendering system further comprises an automatic compensation system, said automatic compensation system comprising a control device and at least one ultrasonic sensor connected to the control device and arranged between the at least one hopper body of the hopper the two parallel calender rollers, said at least one ultrasonic sensor being configured to detect the amount of powder supplied by the scoop of the hopper to the two parallel calender rollers. This automatic compensation system (closed loop thanks to the ultrasonic sensor) allows to have a continuous feeding without hole (needed matter) in calendering input by gravity effect, or gravity "auto-compensation" (i.e., if powder is missing in the interspace between the two rollers, powder present in the hopper falls automatically just as sand would do in a reversed bottle).

In a particular embodiment of the invention, the hopper comprises two hopper bodies mounted onto the frame and containing powder, each hopper body being arranged above the two parallel calender rollers so as to supply with powder interspace between the two parallel calender rollers.

In a preferred embodiment, the two hopper bodies are configured to rotate in a desynchronized manner. More precisely, the two hopper bodies are configured such that one of the hopper bodies is loading powder while the other pours the powder between the two parallel calender rollers. This allows to always have one hopper body which is ready to load powder between the two parallel calender rollers.

### BRIEF DESCRIPTION OF THE FIGURES

Other advantages and features of the invention will become more readily apparent from the following description of a specific embodiment of the invention. The specific embodiment of the present invention as set forth is given as a non-restrictive example only and represented in the accompanying drawings, in which:
- figure 1 is a perspective view of a calendering system according to an embodiment of the present invention, the calendering system comprising two parallel calender rollers and a hopper, the hopper being provided with two hopper bodies;
- figure 2 is a perspective view of one of the hopper bodies of figure 1;
- figure 3 is an enlarged perspective view showing an embodiment detail of the hopper body of figure 2; and
- figures 4 to 6 are front views of the hopper body of figure 2 showing different positions of the hopper body during its rotation cycle.

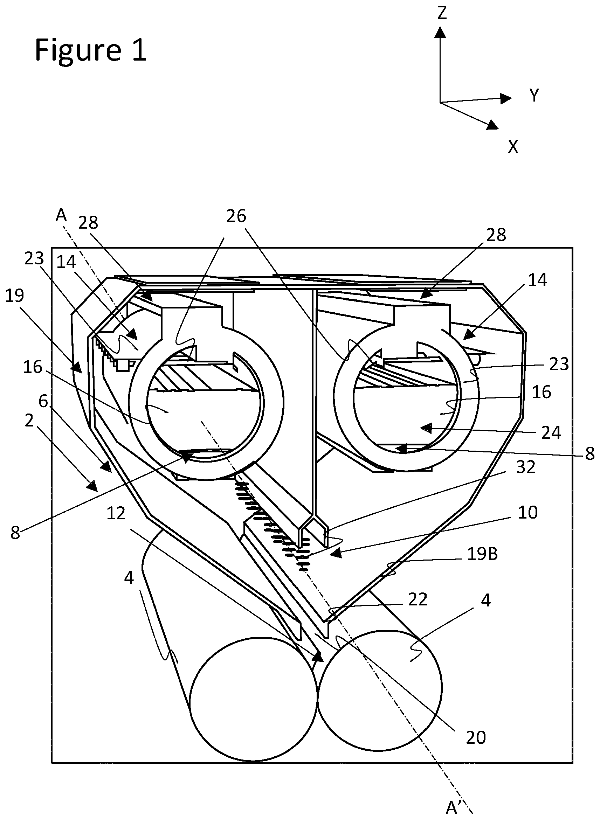

Corresponding reference numerals refer to the same or corresponding parts in each of the figures. In figures 1 to 6 an orthonormal frame **X-Y-Z** is shown. In the following description, the vertical direction designates the direction parallel to the **Z** axis, and the horizontal direction designates any direction perpendicular to the vertical direction, in other words any direction contained in the **X-Y** plane. Furthermore, the longitudinal direction A-A' designates the main direction of extension of the hopper body. A transverse direction designates any direction perpendicular to the longitudinal direction. In the particular embodiment shown in figures 1 to 6, the longitudinal direction corresponds to the horizontal direction.

### DETAILED DESCRIPTION OF PREFERRED EMBODIMENTS

With reference to Figure 1, a calendering system **2** comprises two parallel calender rollers **4** and a hopper **6.** Preferably, the calendering system **2** further comprises an automatic compensation system **10.** The calendering system **2** further comprises means for controlling a rotational movement of the hopper **6** relative to the two parallel calender rollers **4** (such means not being shown in the Figures for clarity purposes).

As shown in Figure 1, the two parallel calender rollers **4** define an interspace **12** between them. The hopper **6** classicaly comprises a frame (not shown in the Figures) and at least one hopper body **14** containing powder **16** and arranged above the two parallel calender rollers **4** so as to supply with powder **16** the interspace **12** between the two parallel calender rollers **4.** In the particular embodiment shown in Figure 1, the hopper **6** comprises two hopper bodies **14** arranged above the two parallel calender rollers **4.** In order to supply with powder **16** the interspace **12** between the two parallel calender rollers **4,** each hopper body **14** is configured to supply with powder a single opened funnel-shaped enclosure **19,** the bottom opening **20** of which is facing the interspace **12,** above thereof. In a particular embodiment shown in Figure 1, the two hopper bodies **14** are themselves arranged within the opened funnel-shaped enclosure **19.** In the particular embodiment of Figure 1, the enclosure **19** comprises a funnel-shaped bottom end portion **19B** and a nose **22** (which is provided with the bottom opening **20**). The nose **22** extends the funnel-shaped bottom end portion **19B** downwards and is arranged facing the two parallel calender rollers **4,** more particularly the interspace **12** between them. Such a configuration for the hopper bodies **14** and for the opened funnel-shaped enclosure **19** (the configuration of the latter being very similar to that of an "up-side-down" bottle) allows to use gravity as a major force to generate powder stream from the middle-top of the enclosure **19** to the nose **22.** The empty interspace **12** is thereby filled up spontaneously with powder **16** by gravity.

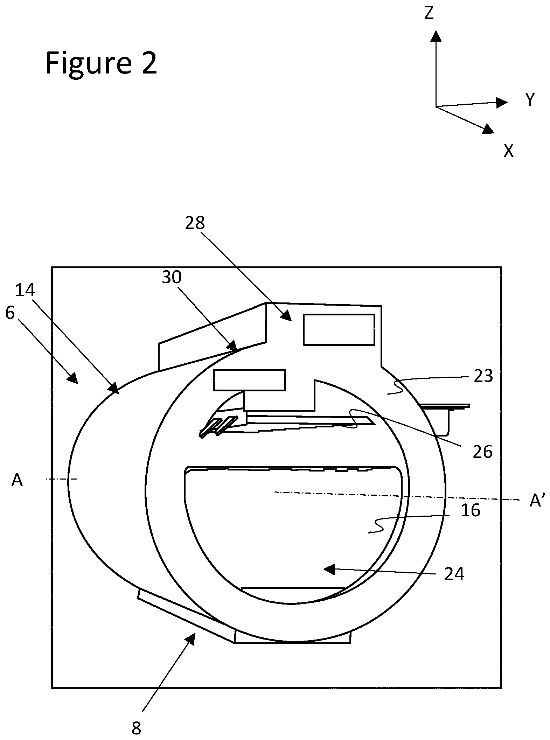

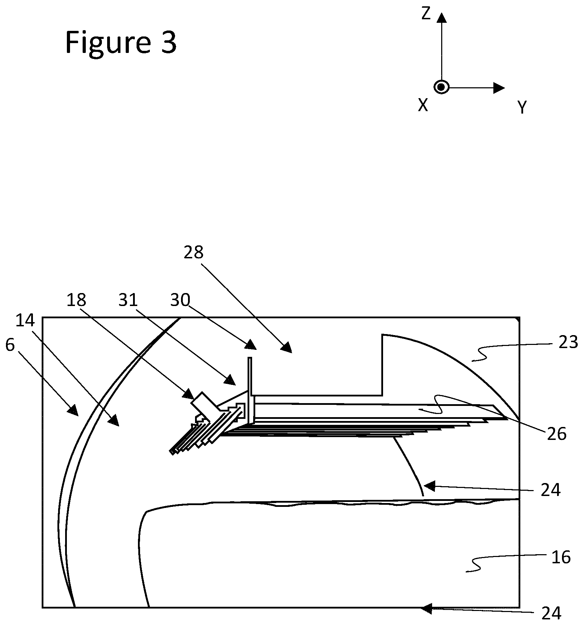

Each hopper body **14** is mounted onto the frame and contains powder **16.** More precisely, each hopper body **14** is a mounted rotatable relative to the frame about a longitudinal rotation axis A-A'. Each longitudinal rotation axis A-A' is a main extension axis of the corresponding hopper body **14.** Preferably, each hopper body **14** is a cylinder, and the longitudinal rotation axis A-A' is the main extension axis of the cylinder. Each hopper body **14** has an outer wall **23** which defines an internal housing **24** in which the powder **16** is stored. Preferably, as shown in Figures 2 and 3, each hopper body **14** is further provided with a plurality of rotating actuators **26.** Each rotating actuator **26** of a given hopper body **14** is configured to rotate said hopper body **14** relative to the frame, as it will be described with more details later. Preferably, the two hopper bodies **14** are configured to rotate in a desynchronized manner. More precisely, the two hopper bodies **14** are configured such that one of the hopper bodies **14** is loading powder **16** while the other pours the powder **16** between the two parallel calender rollers **4.**

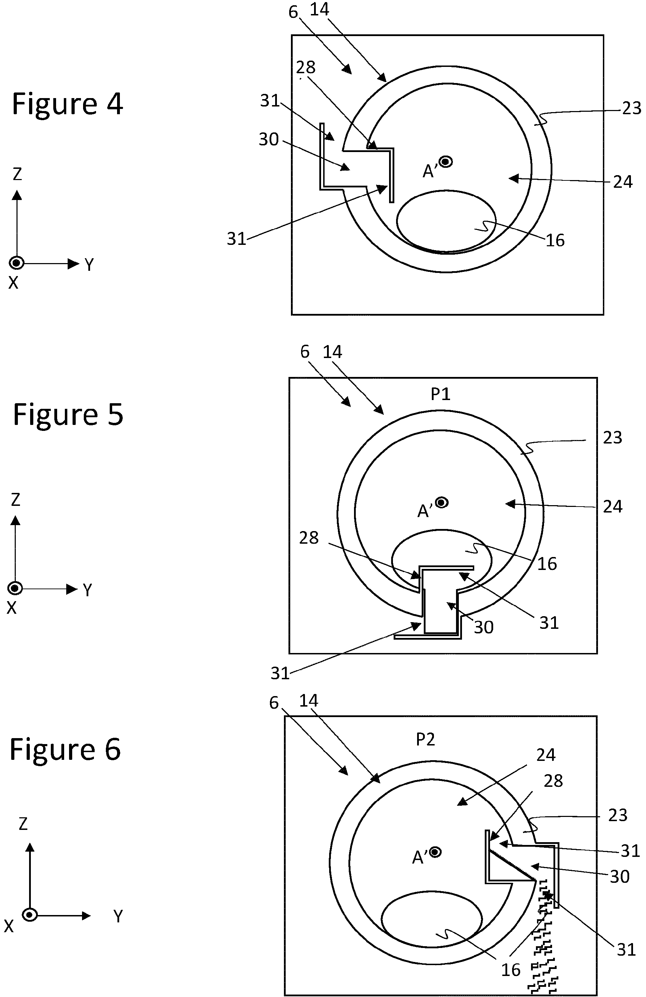

As shown in Figures 1 to 6, the outer wall **23** of each hopper body **14** is provided with a scoop **28.** The scoop **28** defines a through opening **30** which passes through the outer wall **23** of the corresponding hopper body **14.** The scoop **28** is configured to collect part of the powder **16** at each rotation cycle of the hopper body **14**, at a first position **P1** of the hopper body **14** (said first position **P1** being shown in Figure 5), and to release said part of the powder **16** out of the hopper body **14** through the opening **30,** due to gravity, at a second position **P2** of the hopper body **14** (said second position **P2** being distinct from the first position **P1** and being shown in Figure 6). In the particular embodiment shown in Figures 1 to 6, the cross section of the scoop **28** in the transverse direction has a substantially "Z" shape. The scoop **28** takes for example the form of an enclosure with double pairs of parallel walls and extending on either side of the outer wall **23** (inside and outside the hopper body **14**), through the opening **30,** and itself having two apertures **31.** One of the apertures **31** opens inside the hopper body **14,** and the other aperture **31** opens outside the hopper body **14,** thus allowing the scoop **28** both to collect part of the powder **16** at the first position **P1** of the hopper body **14,** and to release said part of the powder **16** out of the hopper body **14** at the second position **P2** of the hopper body **14.**

Preferably, as shown in Figures 5 and 6, the first and second positions **P1, P2** of the hopper body **14** are shifted by an angle of substantially 90 degrees.

The automatic compensation system **10** comprises a control device (not shown in the Figures) and several ultrasonic sensors **32** which are connected to the control device. Each ultrasonic sensor **32** is arranged between the hopper bodies **14** and the two parallel calender rollers **4.** Each ultrasonic sensor **32** is configured to detect the amount of powder **16** supplied by the scoop **28** of each hopper body **14** to the two parallel calender rollers **4.**

Each hopper body **14** further comprises a feeler cap **8.** The control device is connected to each feeler cap **8.** Each feeler cap **8** is arranged opposite the scoop **28** of the corresponding hopper body **14** and is configured to supply with powder **16** the hopper body **14** upon receipt of a control signal from the control device.

Preferably, as shown in Figure 3, the hopper **6** further comprises at least one flap **18.** Each flap **18** is connected to the control device and is arranged within one of the hopper bodies **14.** Each flap **18** is located at an inner aperture **31** of the scoop **28** of said hopper body **14,** and is configured to at least partially close the scoop **28** upon receipt of a control signal from the control device, when the flap **18** is in a "closed" position (said "closed" position being a position in which the flap **18** extends upward). In the particular embodiment shown in Figure 3, each flap **18** extends one of the rotating actuators **26.** These flaps **18** are configured to disturb the powder flow upon receipt of the control signal from the control device, making it possible to regulate the amount of powder **16** which is loaded into the scoop **28** but also the position for which a predetermined amount of powder **16** is missing between the two parallel calender rollers **4,** depending on the position of each flap **18** in its closed position.

This disturbance movement of the flaps **18** further allows to load less powder where needed to decrease the powder distribution in one or several positions of the hopper bodies **14.** The automatic compensation system **10** is thus configured to control the flaps **18** (thanks to the control device) according to the level of powder between the two parallel calender rollers **4,** such a level being measured by the ultrasonic sensors **32.**

The operation of the calendering system **2** according to the invention will herein be described.

Initially, each hopper body **14** lies in a starting position shown in Figure 4. Then, each hopper body **14** is rotated about its longitudinal rotation axis A-A', until reaching the first position **P1** shown in Figure 5. Some of the powder **16** which is present in each hopper body **14** is then collected by a corresponding scoop **28** at this first position **P1** of the hopper body **14.** Then, each hopper body **14** is rotated about its longitudinal rotation axis A-A', until reaching the second position **P2** shown in Figure 6. Part of the powder **16** which is collected by the corresponding scoop **28** is then released out of the hopper body **14,** due to gravity, at this second position **P2** of the hopper body **14.** The rest of the powder remains on the scoop **28** and falls back within the hopper body **14.** The powder **16** released out of each hopper body **24** then falls through the funnel-shaped bottom end portion **19B** and the nose **22** of the enclosure **19** and spontaneously creates a powder nip at the interspace **12** between the two calender rollers **4.** Each hopper body **14** is then rotated about its longitudinal rotation axis A-A', until reaching the position shown in Figure 4, and the cycle is repeated in the same way.

This configuration allows powder **16** to flow continuously and homogeneously from the main hopper bodies capacity to the nose **22** of the enclosure **19.** When the powder nip is created at the interspace **12**, the powder stream stops from itself without any action, by physical saturation. When the ultrasonic sensors **32** detect that the amount of powder **16** between the two parallel calender rollers **4** is insufficient and/or non-uniform (for example via a difference in powder height), the control device sends a signal to the flaps **18** so as to control the position of said flaps **18** and to supply with powder **16** the calender rollers **4** where the matter is needed . The cycle is then repeated. This calendering system **2** allows the hopper **6** to distribute the right quantity of powder **16** to the two parallel calender rollers **4.** The calendering system **2** according to the invention ensures homogeneous powder distribution through gravity, in any dimension.

Naturally, the invention is described in the foregoing by way of example. It is understood that the person skilled in the art is able to carry out different variants of the invention without going beyond the scope of the invention.

## Claims

1. A hopper (6) comprising a frame and at least one hopper body (14) mounted onto the frame and containing powder (16), said hopper body (14) having an outer wall (23) which defines an internal housing (24) in which said powder (16) is stored,
**characterized in that** the hopper body (14) is mounted rotatable relative to the frame about a longitudinal rotation axis (A-A'), said longitudinal rotation axis (A-A') being a main extension axis of the hopper body (14), and **in that** the outer wall (23) of the hopper body (14) is provided with a scoop (28), said scoop (28) defining a through opening (30) passing through the outer wall (23) of the hopper body (14), said scoop (28) being configured to collect part of the powder (16) at each rotation cycle of the hopper body (14), at a first position (P1) of the hopper body (14), and to release said part of the powder (16) out of the hopper body (14) through said opening (30), due to gravity, at a second position (P2) of the hopper body (14) which is distinct from the first position (P1).

2. The hopper (6) according to claim 1, wherein the hopper body (14) is further provided with at least one rotating actuator (26), said at least one rotating actuator (26) being configured to rotate the hopper body (14) relative to the frame.

3. The hopper (6) according to claim 1 or 2, wherein the cross section of the scoop (28) has a substantially "Z" shape.

4. The hopper (6) according to any one of the preceding claims, wherein the first and second positions (P1, P2) of the hopper body (14) are shifted by an angle of substantially 90 degrees.

5. The hopper (6) according to any one of the preceding claims, wherein the hopper (6) further comprises at least one flap (18), said at least one flap (18) being arranged within said hopper body (14), being located at an inner aperture (31) of the scoop (28), and being configured to at least partially close said scoop (28).

6. The hopper (6) according to any one of the preceding claims, wherein the hopper body (14) further comprises a feeler cap (8), said feeler cap (8) being arranged opposite the scoop (28) of said hopper body (14) and being configured to supply with powder (16) said hopper body (14) upon receipt of a control signal from a control device.

7. A calendering system (2) comprising two parallel calender rollers (4) and a hopper (6), said hopper (6) being a hopper according to any one of the preceding claims, the two parallel calender rollers (4) defining an interspace (12) between them, the at least one hopper body (14) of the hopper (6) being arranged above the two parallel calender rollers (4) so as to supply with powder (16) said interspace (12) between the two parallel calender rollers (4).

8. The calendering system (2) according to claim 7, wherein the calendering system (2) further comprises an automatic compensation system (10), said automatic compensation system (10) comprising a control device and at least one ultrasonic sensor (32) connected to the control device and arranged between the at least one hopper body (14) of the hopper (6) and the two parallel calender rollers (4), said at least one ultrasonic sensor (32) being configured to detect the amount of powder (16) supplied by the scoop (28) of the hopper (6) to the two parallel calender rollers (4).

9. The calendering system (2) according to claim 7 or 8, wherein the hopper (6) comprises two hopper bodies (14) mounted onto the frame and containing powder (16), each hopper body (14) being arranged above the two parallel calender rollers (4) so as to supply with powder (16) said interspace (12) between the two parallel calender rollers (4).

10. The calendering system (2) according to claim 9, wherein the two hopper bodies (14) are configured to rotate in a desynchronized manner.

## Patentansprüche

1. Trichter (6), umfassend einen Rahmen und mindestens einen an dem Rahmen montierten Trichterkörper (14), der Pulver (16) enthält, wobei der Trichterkörper (14) eine Außenwand (23) aufweist, die ein inneres Gehäuse (24) definiert, in dem das Pulver (16) gelagert wird,
**dadurch gekennzeichnet, dass** der Trichterkörper (14) relativ zu dem Rahmen um eine Längsdrehachse (A-A') drehbar montiert ist, wobei die Längsdrehachse (A-A') eine Haupterstreckungsachse des Trichterkörpers (14) ist, und dass die Außenwand (23) des Trichterkörpers (14) mit einer Schaufel (28) versehen ist, wobei die Schaufel (28) eine Durchgangsöffnung (30) definiert, die durch die Außenwand (23) des Trichterkörpers (14) hindurchgeht, wobei die Schaufel (28) konfiguriert ist, um einen Teil des Pulvers (16) bei jedem Drehzyklus des Trichterkörpers (14) an einer ersten Position (P1) des Trichterkörpers (14) zu sammeln und den Teil des Pulvers (16) aus dem Trichterkörper (14) durch die Öffnung (30) aufgrund der Schwerkraft an einer zweiten Position (P2) des Trichterkörpers (14) freizugeben, die sich von der ersten Position (P1) unterscheidet.

2. Trichter (6) nach Anspruch 1, wobei der Trichterkörper (14) ferner mit mindestens einem Drehaktor (26) versehen ist, wobei der mindestens eine Drehaktor (26) konfiguriert ist, um den Trichterkörper (14) relativ zu dem Rahmen zu drehen.

3. Trichter (6) nach Anspruch 1 oder 2, wobei der Querschnitt der Schaufel (28) im Wesentlichen eine "Z"-Form aufweist.

4. Trichter (6) nach einem der vorstehenden Ansprüche, wobei die erste und die zweite Position (P1, P2) des Trichterkörpers (14) um einen Winkel von im Wesentlichen 90 Grad verschoben sind.

5. Trichter (6) nach einem der vorstehenden Ansprüche, wobei der Trichter (6) ferner mindestens eine Klappe (18) umfasst, wobei die mindestens eine Klappe (18) innerhalb des Trichterkörpers (14) angeordnet ist, sich an einer inneren Öffnung (31) der Schaufel (28) befindet und konfiguriert ist, um die Schaufel (28) mindestens teilweise zu verschließen.

6. Trichter (6) nach einem der vorstehenden Ansprüche, wobei der Trichterkörper (14) ferner eine Fühlerkappe (8) umfasst, wobei die Fühlerkappe (8) gegenüber der Schaufel (28) des Trichterkörpers (14) angeordnet ist und konfiguriert ist, um dem Trichterkörper (14) Pulver (16) zuzuführen, wenn ein Steuersignal von einer Steuervorrichtung empfangen wird.

7. Kalandriersystem (2), umfassend zwei parallele Kalanderwalzen (4) und einen Trichter (6), wobei der Trichter (6) ein Trichter nach einem der vorstehenden Ansprüche ist und die zwei parallelen Kalanderwalzen (4) einen Zwischenraum (12) zwischen sich definieren, wobei der mindestens eine Trichterkörper (14) des Trichters (6) oberhalb der zwei parallelen Kalanderwalzen (4) angeordnet ist, um dem Zwischenraum (12) zwischen den zwei parallelen Kalanderwalzen (4) Pulver (16) zuzuführen.

8. Kalandriersystem (2) nach Anspruch 7, wobei das Kalandriersystem (2) ferner ein automatisches Kompensationssystem (10) umfasst, wobei das automatische Kompensationssystem (10) eine Steuervorrichtung und mindestens einen Ultraschallsensor (32) umfasst, der mit der Steuervorrichtung verbunden und zwischen dem mindestens einen Trichterkörper (14) des Trichters (6) und den zwei parallelen Kalanderwalzen (4) angeordnet ist, wobei der mindestens eine Ultraschallsensor (32) konfiguriert ist, um die Menge an Pulver (16) zu erkennen, die den zwei parallelen Kalanderwalzen (4) von der Schaufel (28) des Trichters (6) zugeführt wird.

9. Kalandriersystem (2) nach Anspruch 7 oder 8, wobei der Trichter (6) zwei Trichterkörper (14) umfasst, die an dem Rahmen montiert sind und Pulver (16) enthalten, wobei jeder Trichterkörper (14) oberhalb der zwei parallelen Kalanderwalzen (4) angeordnet ist, um dem Zwischenraum (12) zwischen den zwei parallelen Kalanderwalzen (4) Pulver (16) zuzuführen.

10. Kalandriersystem (2) nach Anspruch 9, wobei die zwei Trichterkörper (14) konfiguriert sind, um sich in einer desynchronisierten Weise zu drehen.

## Revendications

1. Trémie (6) comprenant un châssis et au moins un corps de trémie (14) monté sur le châssis et contenant de la poudre (16), ledit corps de trémie (14) ayant une paroi externe (23) qui définit un logement interne (24) dans lequel ladite poudre (16) est stockée,
**caractérisée en ce que** le corps de trémie (14) est monté de manière rotative par rapport au châssis autour d'un axe de rotation longitudinal (A-A'), ledit axe de rotation longitudinal (A-A') étant un axe d'extension principal du corps de trémie (14), et **en ce que** la paroi externe (23) du corps de trémie (14) est pourvue d'un godet (28), ledit godet (28) définissant une ouverture traversante (30) traversant la paroi externe (23) du corps de trémie (14), ledit godet (28) étant conçu pour collecter une partie de la poudre (16) à chaque cycle de rotation du corps de trémie (14), au niveau d'une première position (P1) du corps de trémie (14), et pour libérer ladite partie de la poudre (16) hors du corps de trémie (14) par ladite ouverture (30), sous l'effet de la gravité, au niveau d'une seconde position (P2) du corps de trémie (14) qui est distincte de la première position (P1).

2. Trémie (6) selon la revendication 1, dans laquelle le corps de trémie (14) est en outre pourvu d'au moins un actionneur rotatif (26), ledit au moins un actionneur rotatif (26) étant conçu pour faire tourner le corps de trémie (14) par rapport au châssis.

3. Trémie (6) selon la revendication 1 ou 2, dans laquelle la section transversale du godet (28) a une forme sensiblement en « Z ».

4. Trémie (6) selon l'une quelconque des revendications précédentes, dans laquelle les première et seconde positions (P1, P2) du corps de trémie (14) sont décalées selon un angle de sensiblement 90 degrés.

5. Trémie (6) selon l'une quelconque des revendications précédentes, dans laquelle la trémie (6) comprend en outre au moins un clapet (18), ledit au moins un clapet (18) étant agencé à l'intérieur dudit corps de trémie (14), étant situé au niveau d'une ouverture interne (31) du godet (28), et étant conçu pour fermer au moins partiellement ledit godet (28).

6. Trémie (6) selon l'une quelconque des revendications précédentes, dans laquelle le corps de trémie (14) comprend en outre un bouchon palpeur (8), ledit bouchon palpeur (8) étant agencé à l'opposé du godet (28) dudit corps de trémie (14) et étant conçu pour alimenter en poudre (16) ledit corps de trémie (14) à la réception d'un signal de commande provenant d'un dispositif de commande.

7. Système de calandrage (2) comprenant deux rouleaux de calandre parallèles (4) et une trémie (6), ladite trémie (6) étant une trémie selon l'une quelconque des revendications précédentes, les deux rouleaux de calandre parallèles (4) définissant un espace intermédiaire (12) entre eux, l'au moins un corps de trémie (14) de la trémie (6) étant agencé au-dessus des deux rouleaux de calandre parallèles (4) de manière à alimenter en poudre (16) ledit espace intermédiaire (12) entre les deux rouleaux de calandre parallèles (4).

8. Système de calandrage (2) selon la revendication 7, dans lequel le système de calandrage (2) comprend en outre un système de compensation automatique (10), ledit système de compensation automatique (10) comprenant un dispositif de commande et au moins un capteur ultrasonique (32) connecté au dispositif de commande et agencé entre l'au moins un corps de trémie (14) de la trémie (6) et les deux rouleaux de calandre parallèles (4), ledit au moins un capteur ultrasonique (32) étant configuré pour détecter la quantité de poudre (16) fournie par le godet (28) de la trémie (6) aux deux rouleaux de calandre parallèles (4).

9. Système de calandrage (2) selon la revendication 7 ou 8, dans lequel la trémie (6) comprend deux corps de trémie (14) montés sur le châssis et contenant de la poudre (16), chaque corps de trémie (14) étant agencé au-dessus des deux rouleaux de calandre parallèles (4) de manière à alimenter en poudre (16) ledit espace intermédiaire (12) entre les deux rouleaux de calandre parallèles (4).

10. Système de calandrage (2) selon la revendication 9, dans lequel les deux corps de trémie (14) sont conçus pour tourner de manière désynchronisée.
